Europäisches Patentamt

(19) European Patent Office

Office européen des brevets

(11) Veröffentlichungsnummer: **0 075 252**
**B1**

(12) **EUROPÄISCHE PATENTSCHRIFT**

(45) Veröffentlichungstag der Patentschrift: **15.04.87**

(21) Anmeldenummer: **82108465.4**

(22) Anmeldetag: **14.09.82**

(51) Int. Cl.⁴: **A 01 F 15/14**

(54) **Automatische Bindeeinrichtung für Maschinen zum Herstellen von zylindrischen Ballen aus Erntegut in einer Wickelkammer.**

(30) Priorität: **17.09.81 US 303274**

(43) Veröffentlichungstag der Anmeldung:
**30.03.83 Patentblatt 83/13**

(45) Bekanntmachung des Hinweises auf die
Patenterteilung:
**15.04.87 Patentblatt 87/16**

(84) Benannte Vertragsstaaten:
**BE DE FR GB IT LU NL**

(56) Entgegenhaltungen:
**FR-A-2 442 579**
**GB-A-2 053 079**
**US-A-2 667 729**
**US-A-3 913 473**
**US-A-4 009 559**
**US-A-4 062 279**
**US-A-4 150 614**

(73) Patentinhaber: **DEERE & COMPANY**
**1 John Deere Road**
**Moline Illinois 61265 (US)**

(72) Erfinder: **Meiers, Gerald Franklyn**
**1014 Chester**
**Ottumwa Iowa 52501 (US)**

(74) Vertreter: **Fricke, Joachim, Dr. et al**
**Dr. R. Döring, Dr. J. Fricke, Patentanwälte**
**Josephspitalstrasse 7**
**D-8000 München 2 (DE)**

Courier Press, Leamington Spa, England.

**Beschreibung**

Die Erfindung betrifft eine automatische Bindeeinrichtung von Maschinen zum Herstellen von zylindrischen Ballen aus Erntegut in einer Wickelkammer mit den Merkmalen des Oberbegriffs des Anspruchs 1.

Eine solche Maschine zum Herstellen von zylindrischen Ballen ist aus der US—A—41 50 614 bekannt. Bei dieser bekannten Maschine muß der Garnführungsarm in seiner Ruhestellung verriegelt werden, da er unter der Wirkung einer Vorspannfeder steht. Hinzu kommt, daß ein Dreistellungsventil notwendig ist, das normalerweise in der Ruhe eine Neutralstellung einnimmt. Das bedeutet, daß aufgrund der bei Feldbetrieb auftretenden Stöße und Schwingungen und unter der Einwirkung des Eigengewichtes der Garnführ-rungsarm bei der bekannten Maschine ohne eine solche Verriegelung in Ruhe aus der Neutralstellung auswandern würde. Der Kolben des hydraulischen Schwenkantriebes wird nur zum Zweck der Vorbereitung des nächsten Bindezyklus eingefahren. Bei der Arbeitsweise der bekannten Maschine besteht die Möglichkeit, daß das Garn in die Wickelkammer nur eingeführt wird, wenn der Garnführungsarm eine vorbestimmte Ballenwickelstellung erreicht hat. Zur zuverlässigen Einführung des Garnes ist es notwendig, daß der Fahrer den in der Entstehung befindlichen Ballen gegenüber dem vom Boden aufzunehmenden Schwad an Erntegut genau ausrichtet, so daß das Erntegut in dem Bereich der Wickelkammer eingeführt wird, der in der Nähe des Garn- oder Schnurführungsarmes liegt. Die zuverlässige Arbeitsfunktion hängt also von der Aufmerksamkeit und von dem Geschick des Schlepperfahrers ab. Das dem hydraulischen Schwenkantrieb der be-kannten Maschine zugeordnete hydraulische Ven-til wird durch die Spannung des Garnes oder der Schnur betätigt. Dadurch wird es möglich, daß ein vorzeitiger Bindevorgang ausgelöst wird, nähmlich dann, wenn von dem aufzunehmenden Schwad plötzlich übermäßige Gutmengen anfallen. Ein vorzeitiges Auslösen des Bindevorganges kann zur Folge haben, daß der Ballen nicht an seinen Enden ordnungsgemäß gebunden wird.

Es sind ferner halbautomatisch arbeitende Bindeeinrichtungen bekannt, bei denen Auslösung und Beendigung des Bindevorganges auf manuelle Weise erfolgt (vgl. US—A—38 94 484 und US—A—39 13 473).

Demegegenüber bezieht sich die Erfindung auf eine automatisch arbeitende Bindeeinrichtung und es ist Aufgabe der Erfindung, eine solche Einrichtung mit den Merkmalen des Oberbegriffs des Anspruchs 1 so weiterzubilden, daß sie einfach aufgebaut ist und von dem Hydraulikkreis des Ackerschleppers unabhängig arbeitet, so daß auch keine hydraulischen Verbindungen mit dem Ackerschlepper hergestellt bzw. gelöst werden müssen.

Diese Aufgabe wird mit den Mitteln des Anspruchs 1 gelöst.

Bei dem Verschwenken des Schnurführungsarmes werden nur relativ langsame Bewegungen benötigt. Erfolgt wie hier das Verschwenken hydraulisch, wird für das Verschwenken nur eine geringe Druckmittelströmung erforderlich. Wollte man den zugehörigen Druckmittelkreis von dem allgemeinen Hydraulikkreis eines Ackerschleppers ableiten, wäre dazu eine starke Drosselung des Drucköls aus diesem Hydraulikkreis erforderlich. Die feinen Drosselstellen könnten sich dabei sehr leicht durch Fremdkörper verstopfen und damit das System beeinträchtigen. Ein Verstopfen läßt sich auch bei intensiver Filterung des Druckmittelöles in dem Hydraulikkreis nicht völlig ausschließen. Dieser Nachteil wird bei der neuen automatischen Bindeeinrichtung zuverlässig vermieden. Die eigene Druckmittelpumpe kann auf den Bedarf der Anordnung zum hydraulischen Verschwenken so abgestimmt werden, daß relativ weite Strömungsquerschnitte eingesetzt werden können, durch die Gefahr eines Verstopfens des Systems durch Fremdkörper gebannt ist. Die Steuerung des Bindevorganges erfolgt dabei durch eine Steuereinrichtung, die den Antrieb für die zugehörige Druckmittelpumpe steuert, nämlich diesen Antrieb ein- und ausschaltet. Die Umsteuerung der Schwenkrichtung kann dabei durch ein einfaches Zweistellungs-Richtungs-Ventil erfolgen.Da der Schnurführungsarm ausschließlich durch den hydraulischen Antrieb bewegt und der hydraulische Antrieb durch Ein- und Ausschalten der Druckmittelpumpe gesteuert wird, sind Federkräfte zur Bewegung oder zur Lagesicherung des Schnurführungsarmes nicht erforderlich. Das Zweistellungsventil sorgt vielmehr dafür, daß in jeder Ruhestellung des Schnurführungsarmes das Ventil in einer seiner beiden Betriebsstellungen ist, so daß der Schnurführungsarm bei Abschalten des Antriebes der Pumpe bei Erreichen einer bestimmten Stellung diese Stellung auch zuverlässig beibehält. Eine Verriegelung des Schnurführungsarmes in einer seiner Stellungen ist ebenfalls nicht notwendig. Dadurch ergibt sich eine wesentlich einfachere und weniger störungsanfällige Anordnung. In Verbindung mit dem Zweistellungs-Richtungs-Ventil erfolgt die Bewegung des Schnurführungsarmes in beiden Richtungen auf hydraulischem Wege.

Bei der neuen automatischen Bindeeinrichtung kann der Schnurführungsarm der Wickelkammer näher gelagert werden als bei der bekannten Maschine. Dabei wird die Schnur nahe der Mitte der Wickelkammer in diese eingeführt bzw. nahe der Wickelkammer in Bereitschaft gehalten. Dadurch wird die Zuverlässigkeit des Bindevorganges unabhängig von der Aufmerksamkeit des Fahrers des Ackerschleppers, der nicht mehr ständig darauf achten muß, daß der Schwad in Richtung auf die Anfangsstellung des Schnurfüh-rungsarmes ausgerichtet ist. Außerdem gewähr-leistet die neue automatische Bindeeinrichtung, daß der zylindrische Ballen stets über seine ganze Länge mit der Bindeschnur umwickelt wird, da eine Umschaltung der Bewegungsrichtung des Schnurführungsarmes erst nach Erreichen des Endes des vorgesehenen Arbeitshubes möglich ist. Damit ist ein Umwickeln auch der Ballenenden in jedem Falle gewährleistet. Alle diese Vorteile werden bei einer vollautomatischen Arbeitsweise der Bindeeinrichtung erreicht. Der Fahrer des Ackerschleppers ist somit entsprechend entlastet.

In einer bevorzugten Ausführungsform weist die Steuereinrichtung einen bei Erreichen eines vorbestimmten Ballendurchmessers aus einer Abschaltstellung D in eine Auslösestellung E schwenkbaren Kniehebel auf, dessen einer Arm mit dem Ventilbetätigungsarm und mit einem Ein- und Ausschaltgestänge für den Antrieb der Druckmittelpumpe verbunden ist. Dadurch erhält man eine einfache und sichere Betätigung. Eine Vereinfachung erhält man auch dadurch, daß man den von der Steuerungseinrichtung gesteuerten Antrieb für die Druckmittelpumpe als Riementrieb mit einer Riemenspanneinrichtung ausbildet, wobei der eine Arm des Kniehebels mit dem Betätigungsgestänge der Riemenspanneinrichtung verbunden ist.

Weitere vorteilhafte Einzelheiten und Weiterbildungen der automatischen Bindeeinrichtung nach Anspruch 1 ergeben sich aus den Merkmalen der weiteren Unteransprüche 4 bis 10.

Die Erfindung wird nachfolgend anhand schematischer Zeichnungen an einem Ausführungsbeispiel näher erläutert.

Es zeigen:

Figur 1 eine Seitenansicht von der rechten Seite aus einer Maschine zum Herstellung von zylindrischen Ballen aus Erntegut mit einer automatischen Bindeeinrichtung gemäß Erfindung.

Figur 2 im größeren Maßstabe und im Auschnitt einen senkrechten Schnitt durch den Einlaß der Wickelkammer der Maschine nach Figur 1, wobei der Schnurführungsarm in einer Stellung gezeigt ist, in der er die Schnur in die Wickelkammer einleitet.

Figur 3 einen Schnitt entlang der Schnittlinie 3—3 gemäß Figur 1.

Figur 4 im Ausschnitt und in Seitenansicht die Steuereinrichtung un den Antrieb für die Druckmittelpumpe der Bindeeinrichtung nach Fig. 1.

Figur 5 in perspektivischer Darstellung den gleichen Bereich, der in Fig. 4 gezeigt ist, wobei jedoch die hydraulische Pumpe in Fig. 5 weggelassen ist und

Figur 6 in schematischer Darstellung den zur der neuen Bindeeinrichtung gehörenden hydraulischen Kreis.

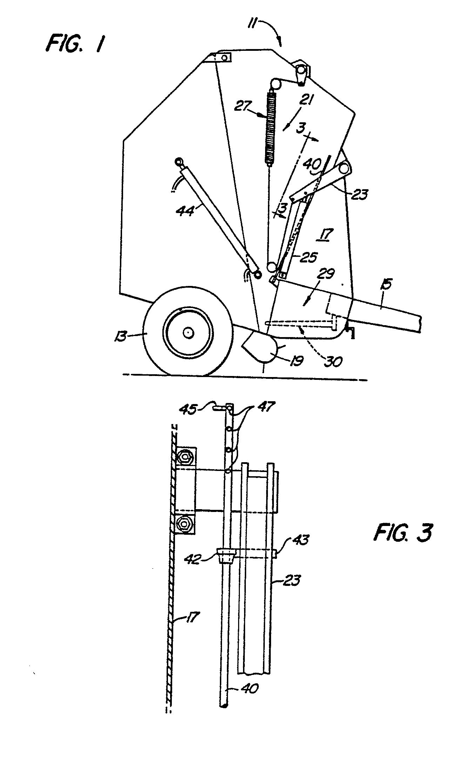

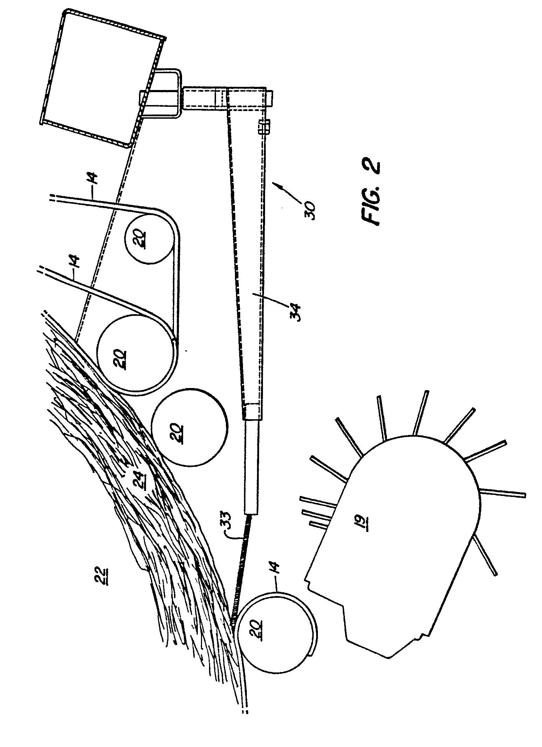

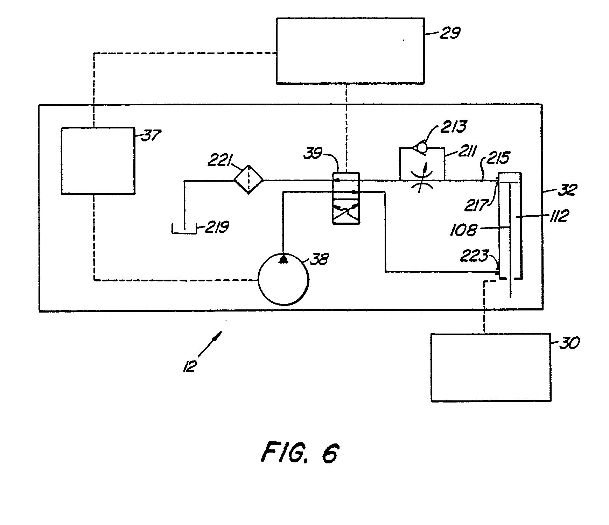

Die in den Figuren 1 und 2 dargestellte Maschine 11 dient zum Herstellen zylindrischer Ballen großer Abmessungen. Der Maschine ist eine automatische Bindeanordnung 12 (Fig. 6) zugeordnet. Die Maschine ist auf dem Boden durch zwei Laufräder 13 abgestützt, von denen nur eines gezeigt ist. Die Maschine kann an einen nicht dargestellten Ackerschlepper angehängt werden, um mit Hilfe des Zuggliedes 15 über einen Acker gezogen zu werden. Der Antrieb der Maschine erfolgt durch Anschluß an das Zapfwellengetriebe des Ackerschleppers. Die Maschine 11 weist zwei aufrechte und sich in Fahrtrichtung erstrekkende Seitenwände 17, auf, die ausgesteift sind. Zwischen diesen wird eine Wickelkammer 22 mit Hilfe von mehreren, im wesentlichen parallel zueinander laufenden Riemen 14 begrenzt, die von mehreren quer ausgerichteten Rollen 20 unterstützt sind, von denen in Fig. 2 nur einige gezeigt sind. Die Maschine weist einen üblichen Aufnehmer 19 auf, der zwischen den Seitenwänden 17 so montiert ist, daß er Erntegut vom Boden aufnehmen und der Wickelkammer 22 zuführen kann. Mit zunehmender Größe des zylindrischen Ballens nimmt der Durchmesser der Wickelkammer zu. Die Dichte des Ballens wird durch eine Spanneinrichtung 21 gesteuert. Diese umfaßt zwei Steuerarme 23, die jeweils an der Außenseite der beiden Seitenwände 17 gelagert sind. Die gewünschte Spannung wird durch zwei hydraulische Zylinder 25 und zwei Federanordnungen 27 erzeugt. Bei Zunahme des Durchmessers des Ballens 24 wird der Arm 23 in Fig. 1 im Gegenuhrzeigersihne entgegen der durch die Zylinder 25 und die Federanordnung 27 erzeugten Spannung verschwenkt. Wenn der Ballen einen vorbestimmten Durchmesser erreicht hat, wird win Bindevorgang mit Hilfe der automatischen Bindeeinrichtung 12 ausgelöst, bei dem eine Schnur um den Umfang des Ballens 24 gelegt und gewickelt wird. Die Bindeeinrichtung 12 weist eine Einrichtung 30 zum Zuführen der Schnur 33 auf. Ferner ist ein hydraulischer Antrieb 32 (Fig. 6) vorgesehen, der zur Bewegung eines Schnurführungsarmes 34 dient. Ferner ist eine Steuereinrichtung 29 vorgesehen, welche in Abhängigkeit von der Zunahme des Durchmessers des Ballens 24 den Bindevorgang auslöst. Dies geschieht dadurch, daß der Antrieb 37 für eine Druckmittelpumpe 38 betätigt wird, um die Pumpe ein- bzw. auszuschalten. Der hydraulikkreis weist ein Zweistellungs-Richtungs-Ventil 39 auf, mit dessen Hilfe die Bewegungsrichtung des Schnurführungsarmes 34 umgekehrt werden kann. Nach Beendigung eines Wickelvorganges wird die Schnur 33 automatisch durch eine Schnurtrenneinrichtung durchtrennt. Nach dem Durchtrennen der Schnur betätigt der Fahrer des Ackerschleppers eine Auswurfeinrichtung (nicht gezeigt), durch welche ein hydraulischer Zylinder 44 (Fig. 1) zum Öffnen der Wickelkammer 22 betätigt wird, so daß der fertige Ballen aus der Wickelkammer auf den Boden rollen kann.

Die Steuereinrichtung 29 (Fig. 1 und 3 bis 5) weist ein den Ballendurchmesser fühlendes Glied 40 auf, das zwischen einem Kniehebel 41 und einem Steuerarm 23 angeordnet ist. Das Fühlglied 40 ist zur Vorspannung des Steuerarmes 23 mittels einer Muffe 42 verschiebbar geführt, die bei 43 an den Steuerarm 23 angelenkt ist. Die wirksame Länge des Fühlgliedes 40 kann dadurch eingestellt werden, daß ein Verbindungssplint 45 in eine von mehreren Bohrungen 47 am Ende des Fühlgliedes 40 eingesetzt wird. Die Stellung des Splintes bestimmt die Größe der Leerbewegung im Bewegungsablauf des Steuerarmes 23 während der Bildung eines Ballens. Der Leerweg ist aufgebraucht, wenn die Muffe 42 an dem Splint 45 angreift und das Fühlglied 40 in Fig. 1 nach rechts mitnimmt, um so den Bindevorgang auszulösen. Je kürzer die wirksame Länge des Fühlgliedes 40 ist, umso kleiner ist der Durchmesser des Ballens, bei dem der Bindevorgang ausgelöst wird. Das fühlglied 40 ist mit einem Ende an dem Kniehebel 41 festgeschraubt. Durch die Bewegung des Fühlgliedes 40 wird somit der Kniehebel 41 aus der Stellung D, die einer leeren Wickelkammer oder einem Ballen entspricht, dessen Durchmesser kleiner als der vorbestimmte Durchmesser ist, um Uhrzeigersinne in die Stellung E bewegt. Diese entspricht einem Fertig gewickelten Ballen. Durch diese Bewegung des Fühlgliedes wird der Bindevorgang ausgelöst. Die Steuereinrichtung 29 ist Gegenstand der EP—Anmeldung Nr. 85 10 52 28.2 (EP—A—0160295).

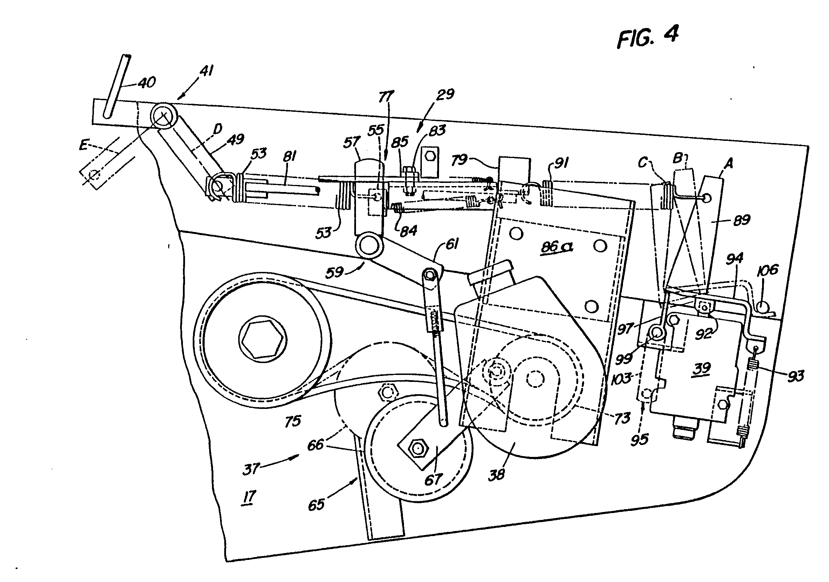

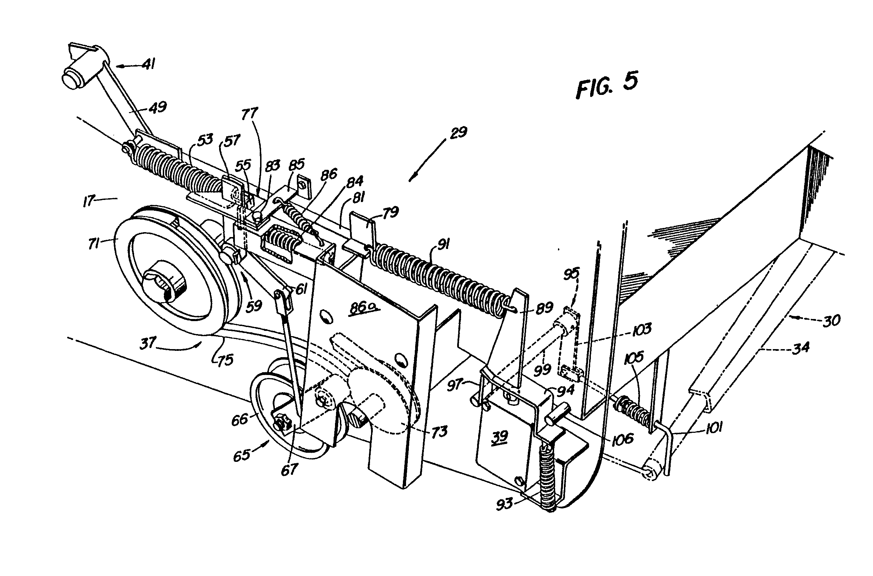

Bei der Bewegung des Kniehebels 41 in die Stellung E nach Fig. 4 wird der Antrieb für die Druckmittelpumpe 38 ausgelöst. Zu diesem Zweck ist ein Arm 49 des Kniehebels 41 mit dem Ende einer Feder 53 verbunden, deren anderes Ende mit einer Riemenspanneinrichtung 65 des als Riementrieb ausgebildeten Antriebes 37 der Druckmittelpumpe verbunden ist und zwar über eine Verbindungseinrichtung. Diese weist ein Ein- und Ausschaltgestänge 59, einen an dem zweiten Ende der Feder 53 und an einem ersten Arm 57 des Ein- und Ausschaltgestänges 59 befestigten Flansch 55 und ein Gestängeglied auf, das einen zweiten Arm 61 des Ein- und Ausschaltgestänges 59 mit einem Arm 67 der Riemenspanneinrichtung 65 verbindet. Die Riemenspanneinrichtung 65 weist eine leerlaufende Riemenscheibe 66 auf, welche an dem einen Ende des schwenkbaren Armes 67 drehbar gelagert ist. Der Riemenantrieb 37 weist eine treibende Riemenscheibe 71 (Fig. 5) auf, die in nicht dargestellter Weise vom Zapfwellenantrieb des Ackerschleppers aus angetrieben wird, sowie eine getriebene Riemenscheibe 73. Beide Scheiben sind durch den Riemen 75 antriebsmäßig miteinander verbunden. Der Antrieb 37 wird in dem Augenblick eingeschaltet, wenn der Ballen 24 einen vorbestimmten Durchmesser erreicht. Zu diesem Zweck ist eine Verriegelungseinrichtung 77 vorgesehen, welche das Ein- und Ausschaltgestänge 59 in einer ersten Stellung festlegt, die einer leeren Wickelkammer oder einem Ballen von zu geringem Durchmesser entspricht. Die Verriegelungseinrichtung 77 wird durch Eingreifen eines Auslösegliedes 79 betätigt, das mit dem zweiten Arm 49 des Kniehebels 41 durch ein Gestängeglied 81 verbunden ist. Die Verriegelungseinrichtung 77 ist bei 83 schwenkbar gelagert und wird durch eine Feder 86 in ihre Sperrstellung vorgepannt. Wenn der Kniehebel 41 in Abhängigkeit vom Erreichen eines vorbestimmten Ballendurchmessers im Uhrzeigersinne in die Stellung E verschwenkt wird, wird die Feder 53 gespannt und gleichzeitig das Gestängeglied 81 mit dem Auslöseglied 79 in Fig. 4 nach links bewegt. Als Folge dieser Bewegung des Auslösegliedes 79 tritt ein Arm 85 der Verriegelungseinrichtung 77 mit dem Auslöseglied 79 in Kontakt, so daß die Verriegelungseinrichtung 77 im Gegenuhrzeigersinne um den Schwenkpunkt 83 verschwenkt wird, wodurch das Ein- und Ausschaltgestänge 59 freigegeben wird. Dieses kann unter der Wirkung der Feder 53 im Gegenuhrzeigersinne verschwenken mit der Folge, daß die Riemenspanneinrichtung 65 den Riemen 75 spannt und so die Antriebsverbindung zwischen den Riemenscheiben 71 und 73 herstellt.

Am Ende eines Bindevorganges sorgt eine Rückstellfeder 84, die zwischen einem Teil 86a des Maschinenrahmens und dem Flansch 55 vorgesehen ist, dafür, daß bei Fehlen einer Spannung durch die Feder 53 die Teile wieder in ihre Ausgangsstellung zurückbewegt und durch die Verriegelungseinrichtung 77 erneut verriegelt werden.

Die Steuereinrichtung 29 nach Fig. 4 und 5 steuert auch ein Steuerventil in Form eines Zweistellungs-Richtungs-Ventils 39. Zu diesem Zweck ist der Ventilbetätigungsarm 89 zwischen drei Stellungen verschwenkbar. Die Stellung A (Fig. 4) entspricht der Ruhestellung. Diese nimmt der Ventilbetätigungsarm 89 in der Zeit zwischen zwei Bindevorgängen ein. Seine Stellung B entspricht einer Bewegung des Schnurführungsarmes 34 von der linken Seite zur rechten Seite der Maschine, während die Stellung C dazu dient, den Schnurführungsarm zur linken Seite zurückzubewegen. Solange sich der Ventilbetätigungsarm 89 in den Stellungen A und B befindet, nimmt das Zweistellungs-Richtungs-Ventil 39 die in Fig. 6 gezeigte Stellung ein. Wird dagegen der Ventilbetätigungsarm 89 in die Stellung C bewegt, nimmt das Ventil 39 seine zweite, in Fig. 6 nicht gezeigte, Stellung ein, in der der untere Steuerbereich des Ventils wirksam in den hydraulischen Kreis nach Fig. 6 eingeschaltet ist.

Die Steuereinrichtung 29 weist eine Zugfeder 91 für den Ventilbetätigungsarm 89 auf. Die Feder ist zwischen einer Zunge und dem Ventilbetätigungsarm 89 eingespannt. Ferner ist eine Rückstellfeder 93 für den Ventilbetätigungsarm 89 vorgesehen, die an dem Arm befestigt ist, um diesen in seine Stellung A vorzuspannen. Sie bewegt den Ventilbetätigungsarm in diese Stellung, wenn am Ende eines Bindevorganges die Zugfeder 91 entspannt ist.

Wenn ein Ballen von vorbestimmten Durchmesser in der Wickelkammer 22 gebildet ist und der Kniehebel 41 im Gegenuhrzeigersinne verschwenkt wird, spannt die Zugfeder 91 den Ventilbetätigungsarm 89 in ausreichendem Maße vor, um den Widerstand der Feder 93 zu überwinden und den Ventilbetätigungsarm 89 aus der Stellung A in die Stellung B zu bewegen. Dadurch wird die hydraulische Betätigungseinrichtung 32 für den Schnurführungsarm 34 eingeschaltet und dieser Arm von der linken Seite zur rechten Seite der Maschine bewegt. Der Ventilbetätigungsarm 89 wird durch eine Sperreinrichtung 95 daran gehindert, sich aus der Stellung B in die Stellung C zu bewegen. Die Sperreinrichtung 95 weist ein Sperrglied 99 mit einem Finger 97 an seinem Ende auf, der mit der Unterseite des Ventilbetätigungsarmes 89 zusammenwirkt. Ein Betätigungsarm 101 der Sperreinrichtung 95 ist mit dem Sperrglied 99 über ein Verbindungsglied 103 verbunden. Wenn der Ventilbetätigungsarm 89 von der Stellung A in die Stellung B bewegt wird, wird ein Betätigungsstift 92 nach außen gezogen. Der Ventilbetätigungsarm 89 ist an einer zweiarmigen Wippe 94 vorgesehen, die an dem Betätigungsstift 92 des Zweistellungs-Richtungs-Ventils 39 angelenkt ist, wobei an einem Wippenarm die zur Rückstellung dienende Feder 93 und am anderen Wippenarm die Sperreinrichtung 95 angreift. Der Betätigungsstift 92 ist an dem Steuerventil 39 vorgesehen. Dadurch, daß dieser Betätigungsstift 92 nach außen gezogen wird, gelangt das eine Ende der Wippe 94 zur Anlage an die Oberseite eines Fingers 97 der Sperreinrichtung, während das andere Ende an die Unterseite eines Anschlages 106 zur Anlage kommt. Der Finger 97 ist an der Seitenwand 17 schwenkbar montiert und kann gegen die Wirkung einer Feder 105 (vgl. Fig. 5) im Gegenuhrzeigersinne verschwenkt werden, und zwar in Abhängigkeit vom gegenseitigen Eingriff des Betätigungsarmes 101 und des Schnurführungsarmes 34. Dieser Eingriff erfolgt am Ende der Bewegung des Schnurführungsarmes 34 von der linken Seite zur rechten Seite der Maschine. Wenn das Sperrglied 99 im Uhrzeigersinne verschwenkt wird, wird durch die Zugfeder 91 der Ventilbetätigungsarm 89 in die Stellung C verschwenkt. Durch die dadurch bedingte Umschaltung des Ventils wird der Schnurführungsarm 34 von der rechten Seite zur linken Seite der Maschine zurückgeführt. Bei der Bewegung des Ventilbetätigungsarmes 39 von der Stellung B in die Stellung C wird die zweiarmige Wippe 94 im Gegenuhrzeigersinne so verschwenkt, daß der Betätigungsstift 92 nach innen gedrückt wird. Bei Betrieb wird Erntegut in die Weckelkammer 22 eingeleitet und ein Ballen 24 von zunehmendem Durchmesser gewickelt. Die Größe der Wickelkammer 22 wird durch den Steuerarm 23 überwacht. Nähert sich der Ballen 24 dem vorbestimmten Durchmesser an, gelangt die Muffe 42 nach Fig. 3 in Kontakt mit dem Splint 45 des Fühlgliedes 40. Dieses wird danach zusammen mit dem Steuerarm 23 weiterbewegt. Infolge dieser Bewegung wird der Kniehebel 41 im Uhrzeigersinne von der Stellung D in die Stellung E verschwenkt. Dabei werden die Spannfeder 53 und die Zugfeder 91 gespannt. Wenn der Kniehebel 41 die Stellung D erreicht, wird das Anslöseglied 79 wirksam und schwenkt den Arm der Verriegelungseinrichtung 77 derart, daß das Ein- und Ausschaltgestänge 59 für den Antrieb 37 der Druckmittelpumpe 38 freigegeben wird. Dadurch kann die Spannfeder 53 über das Gestänge auf die Riemenspanneinrichtung 65 einwirken und diese gegen die Wirkung der Rückstellfeder 84 in ihre Spannstellung verschwenken. Dadurch wird der Antrieb 37 für die Druckmittelpumpe 38 eingeschaltet und der hydraulische Schwenkantrieb 32 für den Bindevorgang in Gang gesetzt. Wenn die Zugfeder 91 durch die Bewegung des Kniehebels 41 aus der Stellung D in die Stellung E gespannt wird, wird der Ventilbetätigungsarm 89 gegen die Wirkung seiner Rückstellfeder 93 aus der Stellung A in die Stellung B nach Fig. 4 verschwenkt. Er erreicht diese Stellung B, bevor das Anslöseglied 79 der Verriegelungseinrichtung 77 den Pumpenantrieb 37 ausrücken kann. Bei der Bewegung von der Stellung A in die Stellung B verschwenkt der Ventilbetätigungsarm im Gegenuhrzeigersinne, so daß der Betätigungsstift 92 nach oben gezogen wird. Damit kann der hydraulische Schwenkantrieb 32 den Schnurführungsarm 34 von der linken Seite nahe der Wand auf die rechte Seite in die Nähe der Wand 17 bewegen. Hat der Schnurführungsarm 34 die rechte Seite erreicht, gelangt er in Kontakt mit dem Betätigungsarm 101 um das Sperrglied 95 zu lösen, so daß der Ventilbetätigungsarm 89 aus der Stellung B under der Wirkung der Zugfeder 91 in die Stellung C bewegt wird. Bei dieser Bewegung wird der Betätigungsstift 92 eingedrückt und die Richtung des hydraulischen Schwenkantriebes 32 umgekehrt. Dadurch wird der Schnurführungsarm 34 von der rechten Seite zur linken Seite zurückbewegt. Am Ende dieses Schwenkweges greift der Schnurführungsarm 34 an eine Schnurtrenneinrichtung an, um die Schnur 33 zu durchtrennen. Danach kann durch den Fahrer der Ballen ausgeworfen werden. Nach dem Auswerfen wird der Steuerarm 23 im Gegenuhrzeigersinne verschwenkt und das Fühlglied 40 nach unten verschoben. Dabei gelangt der Kniehebel 41 aus der Stellung E in die Stellung D. Diese Bewegung erfolgt unter dem Zusammenwirken der Federn 53, 84, 91 und 93. Das Verbindungsgestänge für die Riemenspanneinrichtung 65 wird dabei zurückgestellt, so daß die Riemenspanneinrichtung außer Eingriff mit dem Riemen gelangt. Dadurch wird der Antrieb 37 für die Druckmittelpumpe 38 stillgesetzt. Das Ein- und Ausschaltgestänge 59 kann durch die Verriegelungseinrichtung 77 in der den Riemen entspannenden Stellung festgelegt werden. Bei der Bewegung des Kniehebels 41 in die Stellung D wird die Spannung der Zugfeder 91 verringert, bis die Rückstellfeder 93 die Wirkung der Zugfeder überwindet und den Ventilbetätigungsarm 89 aus seiner Stellung C in die Stellung A zurückschwenken kann. Während dieser Schwenkbewegung bleibt die Stellung des Zweistellungs-Richtungsventils 39 unverändert. Mit der Abschaltung des Antriebes 37 für die Druckmittelpumpe 38 und mit der Rückstellung des Ventilbetätigungsarmes 89 in die Stellung A ist der Bindevorgang beendet. Die Einrichtung befindet sich in einem Zustand, in dem ein neuer Bindevorgang ausgelöst werden kann.

Bei der Darstellung des hydraulischen Schaltkreises sind die Teile der Bindeeinrichtung in Fig. 6 nur schematisch dargestellt. Der hydraulische Schwenkantrieb weist einen doppelt wirkenden Zylinder 112 auf, der mit der Hydraulikpumpe 38 über ein Zweistellungs-Richtungs-Ventil 39 verbunden ist. Zur Einstellung der Strömung des Druckmittels ist eine Ventileinrichtung 211 mit einer einstellbaren Drossel und einem ein Rückschlagventil enthaltenden Umgehungszweig vorgesehen. Diese Ventileinrichtung ist in die Speiseleitung 215 des doppelt wirkenden Zylinders 112 eingeschaltet. Die Leitung 215 ist bei 217 an dem einen Ende des Zylinder 112 angeschlossen. Die zweite Leitung ist am anderen Ende des Zylinders 112 bei 223 angeschlossen. Durch die Ventileinrichtung 211 wird erreicht, daß zum Ausfahren des Kolbens das Druckmittel dem oberen Ende des Zylinders 112 über das Rückschlagventil frei zuströmen kann, während das Abströmen von dieser Seite des Zylinders 112 über die einstellbare Drossel gesteuert erfolgt. An das Zweistellungs-Richtungs-Ventil 39 ist über Filter 221 ein Sumpf 219 und zum anderen die Druckmittelpumpe 38 angeschlossen, die Druckmittel aus dem Sumpf ansaugt. Figur 6 zeigt die Teile in ihrer Stellung in der Phase zwischen zwei Bindevorgängen, in der sich der Ventilbetätigungsarm 89 in der Stellung A nach Fig. 3 befindet. In dieser Phase ist die Druckmittelpumpe 38 stillgesetzt. Erreicht der Ballen einen vorbestimmten Durchmesser, wird der Bindevorgang durch die Steuereinrichtung 29 automatisch ausgelöst, indem der Ventilbetätigungsarm 89 aus der Stellung A in die Stellung B verschwenkt wird. Dadurch wird der Antrieb 37 für die Druckmittelpumpe 38 in Gang gesetzt. Gleichzeitig wird das Zweistellungs-Richtungs-Ventil 39 aus der Stellung nach Fig. 6 umgeschaltet. Damit wird die Druckmittelpumpe 38 mit der Leitung 215 verbunden, so daß der Kolben des Zylinders 112 ausgefahren wird. Das verdrängte Öl fließt in den Sumpf 219 zurück. Wenn der Ventilbetätigungsarm 89 von der Stellung B in die Stellung C bewegt wird, wird das Zweistellungs-Richtungs-Ventil 39 erneut umgestellt, und zwar in die Stellung nach Fig. 6. Der Kolben des Zylinders 112 wird eingefahren, wobei das Öl über die Leitung 215 und die regelbare Drosseleinrichtung in den Sumpf fließt. Am Ende der Bewegung des Schnurführungsarmes 34 wird die Schnur 33 durchtrennt und der Antrieb 37 für die Druckmittelpumpe 38 abgeschaltet und der Ventilbetätigungsarm 89 von der Stellung C in die Stellung A zurückgestellt. Dabei behält das Zweistellungs-Richtungs-Ventil 39 seine Stellung nach Fig. 6 unverändert bei.

## Patentansprüche

1. Automatische Bindeeinrichtung von Maschinen zum Herstellen von zylindrischen Ballen aus Erntegut in einer Wickelkammer (22), bei der die Bindeeinrichtung eine Abgabeeinrichtung (30) zum Abgeben und Einführen der Bindeschnur (33) in die Wickelkammer zum Umwickeln des gebildeten zylindrischen Ballens, einen zwischen Endstellungen vor der Wickelkammer hin und her schwenkbaren Schnurführungsarm (34) und einen hydraulischen Schwenkantrieb (32) mit einem doppelwirkenden Zylinder (112), einer Druckmittelpumpe (38), einem Sumpf (219) und einem Steuerventil (39) aufweist, wobei ein Ventilbetätigungsarm (89) und eine in Abhängigkeit vom Erreichen eines vorbestimmten Ballendurchmessers ansprechende Steuereinrichtung (29) vorgesehen sind, welche einen Schwenkzyklus auslöst und den Ventilbetätigungsarm betätigt, dadurch gekennzeichnet, daß die auf einen vorbestimmten Ballendurchmesser ansprechende Steuereinrichtung (29) steuerungsmäßig mit einem Antrieb (37) für die Druckmittelpumpe (38) zum Ein- und Ausschalten dieser Pumpe und mit dem als Zweistellungs-Richtungsventil (39) ausgebildeten Steuerventil zur Umsteuerung der Schwenkrichtung verbunden ist.

2. Automatische Bindeeinrichtung nach Anspruch 1, dadurch gekennzeichnet, daß die Steuereinrichtung (29) einen bei Erreichen eines vorbestimmten Ballendurchmessers aus einer Abschaltstellung D in eine Auslösestellung E schwenkbaren Kniehebel (41) aufweist, dessen einer Arm (49) mit dem Ventilbetätigungsarm (89) und mit einem Ein- und Ausschaltgestänge (59) für den Antrieb (37) der Druckmittelpumpe (38) verbunden ist.

3. Automatische Bindeeinrichtung nach Anspruch 2, dadurch gekennzeichnet, daß der Antrieb als Riementrieb mit Riemenspanneinrichtung (65) ausgebildet ist und der eine Arm (49) des Kniehebels (41) mit dem Betätigungsgestänge (59, 67) der Riemenspanneinrichtung (65) verbunden ist.

4. Automatische Bindeeinrichtung nach Anspruch 3, dadurch gekennzeichnet, daß das Betätigungsgestänge (59, 67) durch Rückstellfeder (84) in eine den Riemen des Riementriebes entspannende Stellung vorgespannt ist und zwischen dem Kniehebel (41) und dem Betätigungsgestänge (59, 67) eine der Rückstellfeder (84) entgegenwirkende Spannfeder (53) angeordnet ist, die durch die Schwenkbewegung des Kniehebels spannbar ist.

5. Automatische Bindeeinrichtung nach Anspruch 3, dadurch gekennzeichnet, daß eine das Betätigungsgestänge (59, 67) in der den Riemen entspannenden Stellung festlegende, unter Federvorspannung (86) stehende Verriegelungseinrichtung (77) vorgesehen ist, welche durch ein mit dem Kniehebel (41) mitbewegtes Auslöseglied (79, 81) bei Erreichen einer vorbestimmten Stellung des Kniehebels (41) auslösbar ist.

6. Automatische Bindeeinrichtung nach Anspruch 2, dadurch gekennzeichnet, daß der durch Vorspanneinrichtung (93) in eine Stellung vorgespannte Ventilbetätigungsarm (89) mit dem einen Arm (49) des Kniehebels (41) durch eine Zugfeder (91) verbunden ist, die durch die Schwenkbewegung des Kniehebels (41) spannbar ist.

7. Automatische Bindeeinrichtung nach Anspruch 6, dadurch gekennzeichnet, daß eine den Ventilbetätigungsarm (89) in einer der ersten wirksamen Ventilstellung entsprechenden Stellung (B) festlegende, in ihre Sperrstellung vorgespannte Sperreinrichtung (95) vorgesehen ist, die durch den Schnurführungsarm (34) nach Zurücklegen seiner Schwenkbewegung in der ersten Schwenkrichtung selbsttätig lösbar ist, derart, daß der Ventilbetätigungsarm (89) durch die Zugfeder (91) in eine der zweiten wirksamen Ventilstellung entsprechenden Stellung (C) schwenkbar ist.

8. Automatische Bindeeinrichtung nach Anspruch 6 oder 7, dadurch gekennzeichnet, daß der Ventilbetätigungsarm (89) aus einer der ersten wirksamen Ventilstellung entsprechenden Stellung (B) bei fehlender Spannung in der Zugfeder (91) durch die Vorspanneinrichtung (93) in eine Dritte oder Ruhestellung (A) schwenkbar ist, während das Steuerventil (39) in seiner ersten wirksamen Stellung verbleibt.

9. Automatische Bindeeinrichtung nach Anspruch 8, dadurch gekennzeichnet, daß der Ventilbetätigungsarm (89) an einer zweiarmigen Wippe (94) vorgesehen ist, die an einem Betätigungsstift (92) des Steuerventils (39) angelenkt ist, wobei an einem Wippenarm die Rückstellfederanordnung (93) und am anderen Wippenarm die Sperreinrichtung (95, 97) angreift.

10. Automatische Bindeeinrichtung nach den Ansprüchen 4 und 6, dadurch gekennzeichnet, daß die Zugfedern (53, 91) und die Rückstellfederanordnungen (84, 93) bezüglich der Federkräfte und Anordnung so gewählt sind, daß der Ventilbetätigungsarm (89) bei Abschalten des Antriebes (37) für die Druckmittelpumpe (38) automatisch in seine Ausgangsstellung (A) zurückgeführt wird.

**Revendications**

1. Dispositif de liage automatique pour machines de production de balles cylindriques à partir de produits de récolte dans une chambre d'enroulement (22) dans laquelle le dispositif de liage comporte un dispositif distributeur (30) pour distribuer et introduire la ficelle de liage (33) dans la chambre d'enroulement pour l'enrouler autour de la balle cylindrique formée, un bras guideficelle (34) pouvant effectuer en pivotant des mouvements de va-et-vient entre des positions terminales devant la chambre d'enroulement et un dispositif d'entraînement de pivotement hydraulique (32) comportant un vérin à double effet (112), une pompe d'alimentation en fluide sous pression (38), un réservoir (219) et une valve de commande (39), un bras d'actionnement de valve (89) et un dispositif de commande (29) réagissant en fonction de l'obtention d'un diamètre de balle prédédeterminé, qui déclenche un cycle de pivotement et actionne le bras d'actionnement de valve étant prévus, caractérisé en ce que le dispositif de commande (29) qui réagit à un diamètre de balle prédéterminé est couplé, en ce qui concerne la commande, à un dispositif (37) d'entraînement de la pompe d'alimentation en fluide sous pression (38) pour mettre en marche et arrêter cette pompe et à la valve de commande réalisée sous la forme d'une valve de commande de direction à deux positions (39) pour commuter le sens de pivotement.

2. Dispositif de liage automatique suivant la revendication 1, caractérisé en ce que le dispositif de commande (29) comporte un levier coudé (41) pouvant passer en pivotant d'une position d'arrêt D à une position de déclenchement E lors de l'obtention d'un diamètre de balle prédéterminé, dont l'un des bras (49), est relié au bras d'actionnement de valve (89) et à une tringlerie de mise en marche et d'arrêt (59) pour le dispositif d'entraînement (37) de la pompe d'alimentation en fluide sous pression (38).

3. Dispositif de liage automatique suivant la revendication 2, caractérisé en ce que le dispositif d'entraînement est réalisé sous la forme d'une d'une transmission à courroie comportant un dispositif de tension de courroie (65), et en ce que l'un des bras (49) du levier coudé (41) est relié à la tringlerie d'actionnement (59, 67) du dispositif de tension de courroie (65).

4. Dispositif de liage automatique suivant la revendication 3, caractérisé en ce que la tringlerie d'actionnement (59, 67) est précontrainte par un ressort de rappel (84) dans une position détendant la courroie de la transmission à courroie et en ce qu'il est placé entre le levier coudé (41) et la tringlerie de manoeuvre (59, 67) un ressort de tension (53) s'opposant à l'action du ressort de rappel (84), qui peut être tendu par le mouvement de pivotement du levier coudé.

5. Dispositif de liage automatique suivant la revendication 3, caractérisé en ce qu'il est prévu un dispositif de verrouillage (77) soumis à précontrainte élastique (86), immobilisant la tringlerie de manoeuvre (59, 67) dans la position détendant la courroie, qui peut être débloqué par un organe de déclenchement (79, 81) déplacé en même temps que le levier coudé (41) lors de l'atteinte d'une position prédéterminée du levier coudé (41).

6. Dispositif de liage automatique suivant la revendication 2, caractérisé en ce que le bras d'actionnement de valve (89) précontraint par le dispositif de précontrainte (93) dans une position est relié à un bras (49) du levier coudé (41) par un ressort de traction (91) qui peut être tendu par le mouvement de pivotement du levier coudé (41).

7. Dispositif de liage automatique suivant la revendication 6, caractérisé en ce qu'il est prévu un dispositif de blocage (95) précontraint dans sa position de blocage, bloquant le bras d'actionnement de valve (89) dans une position (B) correspondant à la première position de valve active, qui peut être débloqué par le bras guideficelle (34) après parcours de son mouvement de pivotement dans le premier sens de pivotement, de telle sorte que le bras d'actionnement de soupape (89) peut passer en pivotant sous l'action du ressort de traction (91) dans une position (C) correspondant à la seconde position active de la valve.

8. Dispositif de liage automatique suivant la revendication 6 ou 7, caractérisé en ce que le bras d'actionnement de valve (89) peut passer en pivotant d'une position (B) correspondant à la première position active de la valve, la tension étant absente dans le ressort de traction (91), sous l'action du dispositif de précontrainte (93), dans une troisième position ou position de repos (A), tandis que la valve de commande (39) reste dans sa première position active.

9. Dispositif de liage automatique suivant la revendication 8, caractérisé en ce que le bras d'actionnement de valve (89) est prévu sur un levier basculeur à deux bras (94) qui est articulé à une tige d'actionnement (92) de la valve de commande (39), le dispositif à ressort de rappel (93) agissant sur l'un des bras du levier basculeur et le dispositif de blocage (95, 97) sur l'autre bras.

10. Dispositif de liage automatique suivant les revendications 4 et 6, caractérisé en ce que les ressorts de traction (53, 91) et les dispositifs à ressort de rappel (84, 93) sont choisis, en ce qui concerne les élasticités et la disposition, de façon que le bras d'actionnement de valve (89) revienne automatiquement dans sa position initiale (A) lors de l'arrêt du dispositif (37) d'entraînement de la pompe d'alimentation en fluide sous pression (38).

**Claims**

1. An automatic binding apparatus in machines for producing cylindrical bales from crop material in a baling chamber (22), in which the binding apparatus has a delivery means (30) for delivering the binding twine (33) and introducing it into the baling chamber for wrapping around the cylindrical bale formed, a twine guide arm (34) which is pivotable with a reciprocating movement between limit positions in front of the baling chamber, and a hydraulic pivoting drive (32) with a double-acting cylinder (112), a pressure fluid pump (38), a sump (219) and a control valve (39), wherein there are provided a valve actuating arm (89) and a control means (29) which responds in dependence on a predetermined bale diameter being attained, said control means triggering a cycle of pivotal movement and actuating the valve actuating arm, characterised in that the control means (29) which responds to a predetermined bale diameter is controllingly connected to a drive (37) for the pressure fluid pump (38) for cutting said pump in and out, and a control valve which is in the form of a two-positional directional control valve (32) for reversing the direction of pivotal movement.

2. An automatic binding apparatus according to claim 1 characterised in that the control means (29) has a bell crank (41) which is pivotable from a cut-out position D into a trigger position E when a predetermined bale diameter is reached and in which one arm (49) is connected to the valve actuating arm (89) and to a cut-in and cut-out linkage (59) for the drive (37) for the pressure fluid pump (38).

3. An automatic binding apparatus according to claim 2 characterised in that the drive is in the form of a belt drive with belt tensioning means (65) and the one arm (49) of the bell brank (41) is connected to the actuating linkage (59, 67) of the belt tensioning means (65).

4. An automatic binding apparatus according to claim 3 characterised in that the actuating linkage (59, 67) is biased by return spring (84) into a position in which the belt of the belt drive is relieved of tension, and disposed between the bell crank (41) and the actuating linkage (59, 67) is a tensioning spring (53) which acts in opposition to the return spring (84) and which can be tensioned by the pivotal movement of the bell crank.

5. An automatic binding apparatus according to claim 3 characterised in that there is provided a locking means (77) which fixes the actuating linkage (59, 67) in the position in which the belt is relieved of tension and which is subjected to a spring bias (86) and which can be released by a triggering member (79, 81) which is moved with the bell crank (41), when the bell crank (41) reaches a predetermined position.

6. An automatic binding apparatus according to claim 2 characterised in that the valve actuating arm (89) which is biased into a position by biasing means (93) is connected to the one arm (49) of the bell crank (41) by a tension spring (91) which can be tensioned by the pivotal movement of the bell crank (41).

7. An automatic binding apparatus according to claim 6 characterised in that there is provided a blocking means (95) which fixes the valve actuating arm (89) in a position (B) corresponding to the first operative valve position and which is biased into its blocking position and which can be automatically released by the twine guide arm (34) after performing its pivotal movement in the first pivoting direction, in such a way that the valve actuating arm (89) can be pivoted by the tension spring (91) into a position (C) corresponding to the second operative valve position.

8. An automatic binding apparatus according to claim 6 or claim 7 characterised in that the valve actuating arm (89) is pivotable from a position (B) corresponding to the first operative valve position, into a third or rest position (A), when there is no tension in the tension spring (91), by the biasing means (93), while the control valve (39) remains in its first operative position.

9. An automatic binding apparatus according to claim 8 characterised in that the valve actuating arm (89) is provided on a double-armed rocker member (94) which is connected to an actuating pin (92) of the control valve (39), wherein the return spring means (93) engages one arm of the rocker member and the blocking means (95, 97) engages the other arm of the rocker member.

10. An automatic binding apparatus according to claims 4 and 6 characterised in that the tension springs (53, 91) and the return spring means (84, 93) are so selected in respect of spring force and arrangement that the valve actuating arm (89) is automatically returned into its initial position (A) when the drive (37) for the pressure fluid pump (38) is cut out.

FIG. 1

FIG. 3

FIG. 2

FIG. 4

FIG. 5

0 075 252

FIG. 6